# EUROPÄISCHE PATENTSCHRIFT

(11) **EP 3 456 778 B1**
(45) Veröffentlichungstag und Bekanntmachung des Hinweises auf die Patenterteilung: **01.04.2020**
(21) Anmeldenummer: 18193987.7
(22) Anmeldetag: 12.09.2018
(51) Int. Cl.: C08L 23/16, B65G 15/00

(54) **GUMMIERTES TEXTILMATERIAL FÜR EINE RIEMENLAGE, ZUGEHÖRIGE KAUTSCHUKMISCHUNG UND RIEMEN**
RUBBERISED TEXTILE MATERIAL FOR A BELT POSITION, RELATED RUBBER COMPOSITION AND BELT
MATÉRIAU TEXTILE CAOUTCHOUTÉ POUR UNE COUCHE DE BANDE, MÉLANGE DE CAOUTCHOUC ET BANDE ASSOCIÉS

(30) Priorität: 14.09.2017 DE 102017121303
(43) Veröffentlichungstag der Anmeldung: 20.03.2019
(73) Patentinhaber: Arntz Beteiligungs GmbH & Co. KG, 37671 Höxter (DE)
(72) Erfinder: Ohlhäuser, Rudolf, 33039 Nieheim (DE); Schäper, Michael, 33098 Paderborn (DE); Ahlemann, Jens-Thomas, 37691 Boffzen (DE)
(74) Vertreter: Gramm, Lins & Partner Patent- und Rechtsanwälte PartGmbB

(56) Entgegenhaltungen:
- EP-A1- 2 441 797
- EP-A1- 2 650 327
- EP-A2- 0 877 053
- DE-T5-112013 005 123
- GB-A- 1 129 288
- US-A- 3 476 642

## Beschreibung

Die Erfindung betrifft ein gummiertes Textilmaterial für eine Riemen-Textillage, bei dem eine Textilbahn wenigstens einseitig mit einer peroxidisch zu vernetzenden Ethylen-Alphaolefin-Kautschukmischung ausgerüstet ist, sowie eine Kautschukmischung für die Herstellung des gummierten Textilmaterials und einen Riemen mit wenigstens einer Lage des gummierten Textilmaterials.

Weit verbreitete und für viele Zwecke verwendete Ethylen-Alphaolefin-Kautschukmischungen sind EPM- und EPDM-Mischungen.

Insbesondere EPDM-Mischungen und Halbzeuge daraus für die Riemenfertigung sind für einen geringen Konfektionstack bekannt. Unter dem Konfektionstack versteht man die Haftung der noch nicht vulkanisierten, "grünen" Kautschukmischung während der Verarbeitung von Kautschukkomponenten eines Bauteils. So ist es z.B. wesentlich, dass bestimmte Lagen vor der Weiterverarbeitung aneinander haften. Für die Konfektion ummantelter Teile, insbesondere textilummantelter Keilriemen, ist ein Konfektionstack zumindest für die automatisierte Herstellung auf Ummantelungsvorrichtungen unerlässlich. Die Handfertigung, mit der dem Problem teilweise begegnet werden kann, ist aufwändig und zeitraubend.

Aus der WO 2009/030529 A1 ist es bekannt, einer EPDM-Mischung klebrig machende Harze zuzusetzen und die so erhaltene Mischung als Haftmittel für eine Textilauflage zu verwenden. Wie sich die Harze, die im Einzelnen nicht angegeben sind, auf die Haftung zwischen Textil und Riemenelastomer und auf wichtige dynamische Eigenschaften auswirken, ist unbekannt. Harze verschlechtern jedoch in der Regel die Festigkeit und Härte.

Die DE 36 04 744 A1 beschreibt, dass Synthesekautschuke bei Mitverwendung von Nitrilkautschuk oder Polyurethankautschuk und Härtungsmitteln mit Phenolharzen verstärkt werden können. Die Mischung kann auch in Kontakt zu Geweben oder Geflechten eingesetzt werden, wobei für eine gute Haftung die zusätzliche Anwendung von Haftvermittlern wie z. B. Kobalt- oder anderen Metallverbindungen empfohlen wird.

Die US 4205559 A beschreibt eine Gewebegummierung aus carboxyliertem Neoprenlatex, wobei hochsiedendes aromatisches Öl als "Tackifier" (Klebrigmacher) verwendet wird.

Der Erfindung liegt die Aufgabe zugrunde, den Konfektionstack einer Dien-haltigen Ethylen-Alphaolefin-Mischung, insbesondere einer EPDM-Mischung zu erhöhen, die als Beschichtung bzw. Gummierung für eine Textillage vorgesehen ist, ohne dabei die dynamischen Eigenschaften des mit der gummierten Textillage versehenen Produkts sowie die Haftung zwischen dem Textil und dem damit ausgerüsteten Elastomer-Grundkörper wesentlich zu verschlechtern.

Die Aufgabe wird durch das gummierte Textilmaterial mit den Merkmalen des Anspruchs 1, die zugehörige Kautschukmischung nach Anspruch 12 und den Riemen nach Anspruch 14 gelöst. Weitere vorteilhafte Ausgestaltungen der Erfindung sind in den Unteransprüchen gekennzeichnet.

Das erfindungsgemäße gummierte Textilmaterial ist zur Verwendung als eine Riemenauflage oder eine innere Textillage im Riemen, d.h. eine innere Riemenlage, die ein Textil enthält, für einen Kraftübertragungsriemen oder einen Förderriemen geeignet. Für das gummierte Textilmaterial wird eine Textilbahn wenigstens auf einer Seite (einseitig oder beidseitig oder durchgehend getränkt) mit einer peroxidisch zu vernetzenden Ethylen-Alphaolefin (EAO)-Kautschukmischung ausgerüstet, die ein Ethylen-Alphaolefin-Dien-Terpolymer enthält oder aus diesem besteht.

Für die Erfindung kann jedes beliebige für Riementextilien gebräuchliche oder geeignete textile Material verwendet, d. h. in der erfindungsgemäßen Weise mit der EPDM-Mischung gummiert werden. Geeignete Textilformen sind Gewebe, Gewirke, Gestricke oder Vliese, wie dem Fachmann, auch hinsichtlich der zu verwendenden Qualitäten, Textilmaterialien bzw. Faden- und/oder Fasermaterialien, Fadenstärken, Gewebedichten, Bindungen und Flächengewichten, bekannt.

Die Beschichtung bzw. Gummierung des Textils kann mit allen bekannten Maßnahmen erfolgen. Hierzu gehören insbesondere die Gummierung am Kalander, sowohl als Belegung (einseitig oder beidseitig) als auch als Friktionierung (einseitig oder beidseitig). Unter "Friktionieren" versteht man das Kalandern von Geweben, bei dem eine Kalanderwalze schneller als die andere läuft, so dass zwischen Gewebe und Walzen eine Friktion entsteht (Textil-Fachwörterbuch, Alois Kiessling, Max Matthes, Fachverlag Schiele & Schoen (1993)). Durch das Friktionieren wird die innige Verbindung zwischen Textil und Beschichtung verstärkt. Ferner kann die Gummierung u.a. durch Tauchen oder Rakeln vorgenommen werden.

Die erhaltenen gummierten oder beschichteten Textilien können in üblicher Weise weiterverarbeitet und als Riementextilauflagen oder als innen liegende textilhaltige Riemenlagen verwendet werden. Hierfür wird beispielsweise an dem beschichteten (gummierten) oder getränkten Textil primär ein Schrägschneid-Prozess durchgeführt, bevor das Textil auf einen Riemenwickel bzw. Riemenrohling aufgebracht wird.

Die erfindungsgemäße Mischung für die Gummierung zeichnet sich dadurch aus, dass die Ethylen-Alphaolefin-Kautschukmischung ein Ethylen-Alphaolefin-Dien-Terpolymer enthält oder aus diesem besteht und dass die Kautschukmischung einen peroxidischen Vernetzer, ein Mineralöl mit wenigstens 50 gewichtsprozentigem Aromatenanteil und wenigstens ein zur Bindung an die Doppelbindungen ungesättigter Polymere befähigtes reaktives Phenol und/oder reaktives Phenolharz enthält. Das reaktive Phenol/Phenolharz einerseits und das Mineralöl andererseits sind zusammen (in Summe) in einem Gehalt von 5 bis 60 phr, bevorzugt in einem Gehalt von 5 bis 40 phr, in der Mischung enthalten.

In bevorzugten Ausführungsformen der Erfindung ist der Dien-Gehalt der Mischung relativ hoch. Die Kautschukmischung enthält vorzugsweise wenigstens 50 phr an Ethylen-Alphaolefin-Dien-Terpolymer, vorzugsweise EPDM, oder besonders bevorzugt wenigstens 70 phr an Ethylen-Alphaolefin-Dien-Terpolymer bzw. EPDM.

Der Drittmonomergehalt des Ethylen-Alphaolefin-Dien-Terpolymers, d.h. der Diengehalt und damit der Gehalt an vernetzbaren Doppelbindungen, sollte relativ hoch sein und wenigstens 4 % (Monomergehalt im Terpolymer in Mol-%) betragen. Wird als Dien-haltiges Terpolymer EPDM eingesetzt, ist es bevorzugt, dass für das Dien Ethyliden-Norbornen (ENB) eingesetzt wurde, d.h., das EPDM ist bevorzugt ein ENB-basiertes EPDM.

Das Ethylen-Alphaolefin-Dien-Terpolymer oder EPDM ist außerdem bevorzugt ein amorpher Kautschuk und kein Flüssigelastomer.

Der Ethylengehalt des EPDM beträgt vorzugsweise 40 - 75 %.

Bei der Gummierungsmischung handelt es sich erfindungsgemäß um eine peroxidisch zu vernetzende Kautschuk-Mischung, die einen Gehalt an einem Peroxid-Vernetzer enthält. Der Peroxid-Vernetzer-Gehalt beträgt vorzugsweise 5-15 phr (Gewichtsteile, bezogen auf 100 Gewichtsteile der Kautschukbestandteile der Mischung). Es handelt sich nicht um eine Mischung, die bei der Härtung während der Produktfertigstellung lediglich bzw. ausschließlich durch Harze vernetzt wird.

Ein erstes Kennzeichen der Erfindung ist es, dass das Ethylen-Alphaolefin-Dien-Elastomer, für das bevorzugt EPDM gewählt wird, sowohl peroxidisch als auch teilweise durch das reaktive Phenol vernetzt und damit gehärtet wird. Ein zueinander in ortho-Stellung difunktionelles reaktives Phenol "verstärkt jedoch durch eine unten noch näher beschriebene Reaktion unter Bildung von Chromanring-Strukturen die Mischung bereits ohne zu vernetzen.

Unter "Phenol" verstehen wir hier Phenole, die funktionelle Gruppen tragen, welche zur Reaktion mit den C-C-Doppelbindungen des ungesättigten Polymers befähigt sind, also eine Vernetzung der Dien haltigen Kautschukmischung über die durch das Dien-Comonomer eingeführten Doppelbindungen bewirken und/oder eine Bindung an diese Doppelbindung eingehen, vorzugsweise unter Ausbildung der oben erwähnten Chromanringe. Gemäß einem bevorzugten Aspekt der Erfindung umfassen die reaktiven Phenole solche, die in ortho-Stellung zur phenolischen OH-Gruppe eine Hydroxymethylgruppe (Methylol-Gruppe) aufweisen.

Die erfindungsgemäß eingesetzten reaktiven Phenole und Phenolharze reagieren, außerdem - ggf. zusätzlich zur oben beschriebenen Vernetzung - soweit mit sich selbst, dass eine gewisse verstärkende Wirkung eintritt. Hierdurch kann der Gehalt an verstärkenden Füllstoffen, die sich in der Regel weniger positiv auf Tack und Haftung auswirken, reduziert werden.

Die reaktiven Phenole umfassen hier definitionsgemäß auch Phenolharze, insbesondere Novolake, Phenol-Formaldehyd-Harze und Resorcin-Formaldehyd-Harze.

Ohne sich auf eine Theorie festlegen zu wollen, besteht der besondere Effekt der Erfindung nach derzeitiger Kenntnis darin, dass das reaktive Phenol und das in für einen Weichmacher relativ geringer Menge vorhandene mineralische Weichmacheröl mit hohem Aromaten-Anteil bei der erfindungsgemäßen Erhöhung des Konfektionstack unter Erhalt einer guten Haftung und guter dynamischer Eigenschaften zusammen wirken.

Die klebrig machende Wirkung aromatischer Mineralöle ist als solche bekannt, wird jedoch im Stand der Technik nur in unpolaren und gesättigten Kautschuken ausgenutzt. Mineralöl-Weichmacher werden in EPDM-Mischungen allgemein nicht verwendet, weil sie mit dem EPDM unverträglich sind, entsprechendes gilt für andere Ethylen-Alphaolefin-Dien-Kautschuke.

Überraschender Weise hat sich jedoch herausgestellt, dass die Verwendung einer nicht zu großen Menge eines Mineralöls mit hohem Aromatengehalt (Gehalt an ein- oder mehrkernige Aromaten, insbesondere ein- oder zweikernigen Aromaten (aromatische und naphthenische Ringe)) im Beisein wenigstens eines reaktiven Phenols in eine Kautschukmischung mit Dien-Gehalt eingearbeitet werden kann und dabei den Tack erhöht. Haftung und dynamische Eigenschaften bleiben dabei gut.

Durch den erhöhten Tack wird die Konfektionierung der mit dem gummierten Textil herzustellenden Artikel deutlich vereinfacht. Auf Grund des aus sich heraus höheren Tacks der Mischung kann gegebenenfalls Gummierungsmaterial eingespart werden. Dies verringert das Flächengewicht der beschichteten oder getränkten, gummierten Textilauflage und macht sie weniger steif. Weiterhin weist die Gummierungsmischung eine verbesserte Verarbeitbarkeit im Belegungsprozess auf.

Das Gewichtsverhältnis des aromatischen Mineralöls relativ zu den reaktiven phenolischen Bestandteilen (Phenole und/oder Phenolharze) beträgt bevorzugt 4:1 bis 3:5. Hierin drückt sich ebenfalls aus, dass beide Komponenten zusammenwirken.

Nach einem bevorzugten Aspekt der Erfindung enthält die Mischung 5 bis 40 phr ein oder mehrere Coaktivatoren, ausgewählt aus der Gruppe der Metall-Acrylate, Metall-Methacrylate, Urethanacrylate, Allylisocyanate, Cyanurate, Isocyanurate, Guanidine, Oxime, Bismaleimide und Schwefel, jeweils einzeln oder in Kombination.

In besonders bevorzugten Ausführungsformen enthält die erfindungsgemäße Mischung wenigstens einen metallorganischen ionischen Coaktivator, vorzugsweise aus der Gruppe der Metall-Acrylate und Metall-Methacrylate und vorzugsweise in einer Menge von 5 bis 25 phr. Geeignet und umfasst sind dabei alle bekannten Coaktivatoren dieses Typs, wie Zinkacrylat und -methacrylat, Magnesiumacrylat und -methacrylat, Calciumacrylat und -methacrylat, besonders bevorzugt Zink-Dimethacrylat (ZnDMA). Dies schließt andere Metall(meth)acrylate nicht aus, die zwar weniger gebräuchlich aber ggf. ebenso geeignet sind.

Der metallische Coaktivator bewirkt, dass aus der Mischung erhaltene Vulkanisate neben den kovalenten auch ionische Bindungsanteile besitzen. Dies verleiht den Vulkanisaten gute dynamische Eigenschaften, insbesondere bei Spannungseinfluss, eine hohe Reißfestigkeit und eine gute Haftung. Auch andere physikalische Eigenschaften gehen mit einer guten Haftung Hand in Hand, so wirkt sich eine gute Weiterreißfestigkeit, ebenfalls positiv auf die Haftung zwischen Textillage und damit ausgerüstetem Körper im fertigen vulkanisierten bzw. peroxidisch vernetzten Produkt aus.

Die für die Gummierung verwendete Kautschuk-Mischung enthält wenigstens 50 phr, weiter bevorzugt wenigstens 70 phr, vorzugsweise wenigstens 80 phr eines Dien-haltigen Kautschuks, d.h. eines mit einem Dien als Comonomer erzeugten Kautschuks innerhalb der Kautschukmischung, wobei sich alle Kautschukanteile, wie üblich, zu 100 phr addieren (phr = "parts per hundred rubber" = Gewichtsteile auf 100 Gewichtsteile als Summe aller Kautschukbestandteile). Neben dem Ethylen-Alphaolefin-Dien-Terpolymer, vorzugsweise EPDM, können, vorzugsweise in untergeordneter Menge, andere EAO-Kautschuke wie insbesondere EPM-Kautschuke vorhanden sein, aber auch als Additive verwendete Spezial-Kautschuke und thermoplastische Bestandteile, mit denen die Elastomermischung verschnitten ist.

Der Diengehalt in dem Ethylen-Alphaolefin-Dien-Terpolymer der Kautschukmischung ist, wie schon beschrieben, erfindungsgemäß hoch. Bevorzugte Gehalte betragen von 4 bis 11 %, vorzugsweise von 6 bis 11 % und insbesondere von 8 bis 11%. Das bevorzugte Drittmonomer eines EPDM ist dabei ENB (Ethyliden-Norbornen).

Das Mineralöl besitzt erfindungsgemäß einen wenigstens 50 Gew.-%igen Aromatenanteil. Solche Weichmacheröl-Typen werden auch als aromatische Weichmacheröle oder aromatische Mineralöle bezeichnet. Neben paraffinischen Bestandteilen sind darin verschiedene aromatische Bestandteile enthalten, und zwar ein- und/oder mehrkernige Aromaten, auch mit anellierten Ringen, bevorzugt maximal 2kernig, d.h. naphthenisch anellierten Ringen. In bevorzugten Ausführungsformen besitzen die genannten Mineralöle 50 bis 95 Gew.-%, vorzugsweise 60 bis 95 Gew.-% und weiter vorzugsweise 60 bis 80 Gew.-% an Aromaten.

Für die Erfindung geeignete "reaktive Phenole" (einschließlich Phenolharze) besitzen, wie oben schon erläutert, funktionelle Gruppen, die gegenüber C-C-Doppelbindungen des ungesättigten Kautschuks, hier der Dien-Komponente des EPDM, "reaktiv sind", d.h. mit diesen reagieren und eine Vernetzung und damit Verstärkung des Kautschuks bewirken, oder alternativ oder zusätzlich Chromanring-Strukturen ausbilden, die als sehr hitzestabil und mechanisch belastbar gelten. Bevorzugte reaktive Phenole dieser Art enthalten reaktive OH-Gruppen und/oder reaktive Methylol-Gruppen. Bevorzugt ist weiterhin, wenn sich wenigstens ein Teil der Methylol-Gruppen eines Harzes oder die Methylol-Gruppe(n) eines einfachen Phenols in ortho-Stellung zum Phenol-OH befinden.

In Weiterbildung der Erfindung enthält die für die Gummierung verwendete Kautschuk-Mischung die Füllstoffe Ruß und/oder wenigstens ein mineralisches Oxid, nämlich vorzugsweise Siliziumdioxid. Alternative mineralische Oxide, die auf diesem Arbeitsgebiet als verstärkende Füllstoffe eingesetzt werden, sind dem Fachmann bekannt und müssen daher nicht alle einzeln genannt werden. Diese Füllstoffe sind auch als "weiße Füllstoffe" bekannt. Dazu gehören neben Silica Aluminiumoxide, Calciumoxide, Mischoxide wie Alumosilikate usw.

Vorzugsweise beträgt der Füllstoffgehalt 5 bis 60 phr, weiter vorzugsweise 5 bis 40 phr eines Füllstoffs oder Füllstoffgemischs. Weiße Füllstoffe sind bevorzugt oder werden gemeinsam mit Ruß eingesetzt, wobei die Rußmenge vorteilhafter Weise kleiner oder gleich der Menge an weißen Füllstoffen ist (Gewichtsteile). Gemäß einer weiteren bevorzugten Ausführungsform wird ausschließlich Siliziumdioxid als Füllstoff eingesetzt. Dabei kann es sich bevorzugt um hochdisperses bzw. nanoskaliges Siliziumdioxid handeln, wie für Kautschukmischungen bekannt und häufig verwendet.

Für den Fachmann ist selbstverständlich, dass die Kautschukmischung für die Gummierung des Textilmaterials neben den Hauptbestandteilen und erfindungsgemäßen Additiven weitere Zusatzstoffe (Additive) enthalten kann, insbesondere Beschleuniger, Verzögerer, Alterungsschutzmittel, UV-Schutzmittel, Prozesshilfen, Aktivatoren, Farbstoffe und anderes mehr. Derartige übliche Zusatzstoffe müssen daher hier nicht gesondert beschrieben werden.

Zur Lösung der Aufgabe umfasst die Erfindung weiterhin eine Kautschukmischung für die Herstellung eines gummierten Textilmaterials, also eine Gummierungsmischung, für die Verwendung in Antriebs- bzw. Kraftübertragungs- oder Förderriemen.

Die Merkmale der Kautschukmischung sind sämtlich schon oben im Zusammenhang mit dem gummierten Textilmaterial beschrieben. Alle diese Merkmale, Effekte und Vorteile gelten für die Kautschukmischung als solche ebenso.

Die Kautschuk-Mischung für die Gummierung des Textilmaterials wird in ihren physikalischen Eigenschaften je nach gewähltem Gummierungs- bzw. Beschichtungsverfahren passend eingestellt. Dabei kommt es vor allem auf die Fließfähigkeit der noch nicht gehärteten Masse an. Vorzugsweise wird die Kautschuk-Mischung mit einer Mooney-Viskosität ML1+4 (100°C) von 20 bis 50 [ME] für die Verarbeitung auf dem Textil bereitgestellt.

Das Textil wird mit der Kautschukmischung in einem Flächengewicht von vorzugsweise nicht mehr als 1000 g/m² und weiter vorzugsweise nicht mehr als 500 g/m² beschichtet oder getränkt, bzw. gummiert.

Die nachfolgend angegebenen physikalischen Werte sind für viele Anwendungsfälle geeignete Zieleigenschaften:
Eine Shore-A-Härte von 60 - 90
Ein Konfektionstack in N/25mm von 10 bis 50
Eine Gewebehaftung in N/25mm von 40 - 150
Eine Weiterreißfestigkeit W-Median (nach DIN 53507) von 4 bis 10
Eine Reißfestigkeit (in MPa) von 10 - 20
Ein Modul10% (in MPa) von 0,5 - 2,5
Ein Modul50% (in MPa) von 1,5 - 4,5
Ein Modul100% (in MPa) von 3,5 - 4,5 %

Die oben genannten Eigenschaften können vom Fachmann mit Hilfe kleinerer Parametervariationen innerhalb der erfindungsgemäßen und bevorzugten Mengenbereiche - insbesondere ausgehend von den u.a. Beispielen - ohne weiteres selbst eingestellt werden.

Zur Lösung der Aufgabe umfasst die Erfindung weiterhin einen Riemen mit wenigstens einer Lage aus dem erfindungsgemäßen gummierten Textilmaterial, das mit der erfindungsgemäßen Kautschukmischung beschichtet, belegt, friktioniert oder getränkt wurde, wie oben ausgeführt. Der erfindungsgemäße Riemen zeichnet sich dadurch aus, dass das erfindungsgemäße Textilmaterial eine innere Textillage in dem Riemen bildet oder auf wenigstens einer Riemenseite als Auflage aufgebracht ist oder den Riemen als Ummantelung umschließt. Die Textilauflage kann auf der Rückseite des Riemens (dem Riemenrücken oder der Förderseite) oder auf der Kraftübertragungsseite oder Innenseite des Riemens (der Riemenscheibenseite, Kompressionsseite, Seite der Rippen oder Zähne) oder beidseitig aber flankenoffen angeordnet sein. Bevorzugt sind außerdem vollummantelte Riemen, insbesondere ummantelte Keilriemen.

Unter einem Textilmaterial verstehen wir wiederum jeden möglichen für eine Riemenauflage geeigneten Textil-Typ, wie oben schon im Einzelnen beschrieben.

Vorzugsweise ist der Riemen, der allgemein ein Kraftübertragungsriemen oder ein Förderriemen sein kann, ein Keilriemen, Keilrippenriemen oder Zahnriemen.

### BEISPIELE

### Beispiel 1 - für eine erfindungsgemäße Kautschukmischung:

| | | |
|---|---|---|
| amorphes EPDM mit hohem ENB-Gehalt, | | |
| 48 % Et, 7,8 % ENB | 85 | phr |
| weitere, u.a. EPM-basierte Kautschukbestandteile | 15 | phr (in Summe) |
| organischer Peroxid-Vernetzer | 7 | phr |
| Mineralöl (Aromaten-Gehalt 74 Gew.-%) | 15 | phr |
| reaktives alkylsubstituiertes Phenolharz | 5 | phr |
| Silica-basierter Füllstoff, SiO2-175 VN3 | 12 | phr |
| Ofenruß N 330 | 12 | phr |
| ZnDMA | 20 | phr |

| | | |
|---|---|---|
| weitere Additive in Gewichtsteilen bis max je 5 phr - in Summe ca. 20 bis 25 phr | | |

Dieses erste erfindungsgemäße Beispiel für eine Kautschukmischung, mit der ein Textil gummiert wird, um mit dem so erhaltenen gummierten Textilmaterial einen Riemen mit gummierter Textillage herzustellen, wird in der nachfolgenden Tabelle einem zweiten Beispiel für eine erfindungsgemäße Kautschukmischung und einem Vergleichsbeispiel für eine herkömmliche Gummierungsmischung gegenübergestellt.

**Tabelle 1 (Zahlenangaben in phr)**

| **Mischungsbestandteil** | **Vergleichsbeispiel** | **Beispiel 1** | **Beispiel 2** |
|---|---|---|---|
| amorphes EPDM¹⁾ | 95 | 85 | 85 |
| weitere KautschukBestandteile | 5 | 15 | 15 |
| paraffinisches Prozessöl | 25 | - | - |
| Mineralöl ²⁾ | - | 15 | 25 |
| Vernetzer ³⁾ | 7 | 7 | 7 |
| reaktives Phenolharz ⁴⁾ | - | 5 | 5 |
| Silica-basierter Füllstoff ⁵⁾ | - | 12 | - |
| Ofenruß | 60 | 12 | 34 |
| ZnDMA 6) | 15 | 20 | 20 |
| weitere Bestandteile | 21,5 | 16,5 | 21,5 |
| phr-Summe | 228,5 | 187,5 | 212,5 |

| | | | |
|---|---|---|---|
| ¹⁾amorphes EPDM mit hohem ENG-Gehalt, 48 % Et, 7,8 % ENB ²⁾Mineralöl mit einem Aromatengehalt von 74 % ³⁾organischer Peroxid-Vernetzer ⁴⁾reaktives alkylsubstituiertes Phenolharz ⁵⁾SiO2-175 VN3 ⁶⁾ Dynalink 634 | | | |

Mit der erfindungsgemäßen Kautschukmischung konnte der Konfektionstack bezüglich der für das Abziehen erforderlichen Kraft [N/25mm] im Vergleich mit der unter "Vergleichsbeispiel" angegebenen, herkömmlichen (kommerziell erhältlichen) EPDM-Gummierungsmischung auf das mehr als 5fache gesteigert werden. Auch die Haftung war bei Beispiel 1 besser als beim Vergleichsbeispiel. Die physikalischen und dynamische Eigenschaften der erfindungsgemäßen Beispiele 1 und 2 wurden als gut beurteilt, u.a. Modul10% [MPa], Modul50% [MPa], Reißfestigkeit, Weiterreißfestigkeit (W-Median nach DIN 53507) sowie die visuell beurteilte Beschichtungsqualität. Beispiel 1 und Beispiel 2 wurden in ihrem Konfektionstack als gleich gut beurteilt, die Haftung war bei Beispiel 2 gegenüber Beispiel 1 verbessert.

### Prüfbedingungen für die Haftklebrigkeit/den Konfektionstack:

50 N Andruckkraft eines aus der jeweiligen Mischung gebildeten Streifens an eine Stahlplatte, 20 Sekunden Haltezeit, Abzuggeschwindigkeit 100 mm/min;
Prüfung auf einem Eplexor 500, Netzsch Gabo Instruments GmbH mit für den Streifen angepasstem Probenhalter.

## Patentansprüche

1. Gummiertes Textilmaterial für eine Riemen-Textillage, bei dem eine Textilbahn wenigstens auf einer Seite mit einer peroxidisch zu vernetzenden Ethylen-Alphaolefin (EAO)-Kautschukmischung ausgerüstet ist, **dadurch gekennzeichnet,**
**dass** die Ethylen-Alphaolefin-Kautschukmischung ein Ethylen-Alphaolefin-Dien-Terpolymer enthält oder aus diesem besteht und dass die Kautschukmischung einen peroxidischen Vernetzer, ein Mineralöl mit wenigstens 50 gewichtsprozentigem Aromatenanteil und wenigstens ein zur Bindung an die Doppelbindungen ungesättigter Polymere befähigtes, reaktives Phenol und/oder reaktives Phenolharz enthält, wobei das reaktive Phenol/Phenolharz und das Mineralöl in einem Gehalt von zusammen 5 bis 60 phr in der Kautschukmischung enthalten sind.

2. Gummiertes Textilmaterial nach Anspruch 1, **dadurch gekennzeichnet, dass** die Kautschukmischung wenigstens 50 phr an Ethylen-Alphaolefin-Dien-Terpolymer enthält, vorzugsweise wenigstens 70 phr.

3. Gummiertes Textilmaterial nach Anspruch 1 oder 2, **dadurch gekennzeichnet, dass** der Diengehalt des Ethylen-Alphaolefin-Dien-Terpolymers von 4 bis 11 % beträgt, vorzugsweise von 6 bis 11 % und insbesondere von 8 bis 11 %.

4. Gummiertes Textilmaterial nach einem der Ansprüche 1 bis 3, **dadurch gekennzeichnet, dass** das Ethylen-Alphaolefin-Dien-Terpolymer ein Ethylen-Propylen-Dien-Terpolymer (EPDM) ist.

5. Gummiertes Textilmaterial nach einem der Ansprüche 1 bis 4, **dadurch gekennzeichnet, dass** das Gewichtsverhältnis des aromatischen Mineralöls zum reaktiven Phenol/Phenolharz 4:1 bis 3:5 beträgt.

6. Gummiertes Textilmaterial nach einem der Ansprüche 1 bis 5, **dadurch gekennzeichnet, dass** die Kautschukmischung 5 bis 40 phr ein oder mehrere Coaktivatoren enthält, ausgewählt aus der Gruppe der Acrylate, Methacrylate, Urethanacrylate, Allylisocyanate, Cyanurate, Isocyanurate, Guanidine, Oxime, Bismaleimide und Schwefel, jeweils einzeln oder in Kombination.

7. Gummiertes Textilmaterial nach einem der Ansprüche 1 bis 6, **dadurch gekennzeichnet, dass** die Kautschukmischung 5 bis 25 phr wenigstens eines metallorganischen ionischen Coaktivators aus der Gruppe der Metall-Acrylate und Metall-Methacrylate enthält, vorzugsweise Zinkdimethacrylat (ZnDMA).

8. Gummiertes Textilmaterial nach einem der Ansprüche 1 bis 7, **dadurch gekennzeichnet, dass** das Mineralöl in der Kautschukmischung 50 bis 95 Gew.-%, vorzugsweise 60 bis 80 Gew.-% an Aromaten besitzt.

9. Gummiertes Textilmaterial nach einem der Ansprüche 1 bis 8, **dadurch gekennzeichnet, dass** das wenigstens eine reaktive Phenol und/oder reaktive Phenolharz reaktive OH-Gruppen und/oder reaktive Methylol-Gruppen enthält.

10. Gummiertes Textilmaterial nach einem der Ansprüche 1 bis 9, **dadurch gekennzeichnet, dass** die Kautschukmischung die Füllstoffe Ruß und/oder wenigstens ein mineralisches Oxid, nämlich vorzugsweise Siliziumdioxid, enthält.

11. Gummiertes Textilmaterial nach einem der Ansprüche 1 bis 10, **dadurch gekennzeichnet, dass** die Kautschukmischung durch einseitiges oder beidseitiges Belegen, Tauchen, Rakeln oder Friktionieren auf das Textilmaterial aufgetragen wird.

12. Kautschukmischung für die Herstellung eines gummierten Textilmaterials nach einem der Ansprüche 1 bis 10 für die Verwendung in einem Antriebs- oder Förderriemen.

13. Kautschukmischung nach Anspruch 12, **dadurch gekennzeichnet, dass** die Kautschukmischung für die Gummierung des Textilmaterials eine Mooney-Viskosität ML1+4 (100°C) von 20 bis 50 [ME] besitzt.

14. Riemen mit wenigstens einer Lage aus dem gummierten Textilmaterial nach einem der Ansprüche 1 bis 10, **dadurch gekennzeichnet, dass** das Textilmaterial eine innere Textillage bildet oder auf wenigstens einer Riemenseite als Auflage aufgebracht ist oder den Riemen als Ummantelung umschließt.

15. Riemen nach Anspruch 13 oder 14, **dadurch gekennzeichnet, dass** der Riemen ein Keilriemen, Keilrippenriemen oder Zahnriemen ist.

## Claims

1. Rubberized textile material for a belt textile ply in which a textile web is equipped at least on one side with a peroxidically crosslinkable ethylene-alpha-olefin (EAO) rubber mixture, **characterized in that**
the ethylene-alpha-olefin rubber mixture contains or consists of an ethylene-alpha-olefin-diene terpolymer and the rubber mixture contains a peroxidic crosslinker, a mineral oil having an aromatics proportion of at least 50 percent by weight and at least one reactive phenol and/or reactive phenol resin capable of binding to the double bonds of unsaturated polymers, wherein the reactive phenol/phenol resin and the mineral oil are present in the rubber mixture in a total content of 5 to 60 phr.

2. Rubberized textile material as claimed in claim 1, **characterized in that** the rubber mixture contains at least 50 phr of ethylene-alpha-olefin-diene terpolymer, preferably at least 70 phr.

3. Rubberized textile material as claimed in claim 1 or 2, **characterized in that** the diene content of the ethylene-alpha-olefin-diene terpolymer is from 4% to 11%, preferably from 6% to 11% and in particular from 8% to 11%.

4. Rubberized textile material as claimed in any of claims 1 to 3, **characterized in that** the ethylene-alpha-olefin-diene terpolymer is an ethylen-propylene-diene terpolymer (EPDM).

5. Rubberized textile material as claimed in any of claims 1 to 4, **characterized in that** the weight ratio of the aromatic mineral oil to the reactive phenyl/phenol resin is 4:1 to 3:5.

6. Rubberized textile material as claimed in any of claims 1 to 5, **characterized in that** the rubber mixture contains 5 to 40 phr of one or more coactivators selected from the group of acrylates, methacrylates, urethane acrylates, allylisocyanates, cyanurates, isocyanurates, guanidines, oximes, bismaleimides and sulfur, each individually or in combination.

7. Rubberized textile material as claimed in any of claims 1 to 6, **characterized in that** the rubber mixture contains 5 to 25 phr of at least one organometallic ionic coactivator from the group of metal acrylates and methyl methacrylates, preferably zinc dimethacrylate (ZnDMA).

8. Rubberized textile material as claimed in any of claims 1 to 7, **characterized in that** the mineral oil in the rubber mixture comprises 50% to 95% by weight, preferably 60% to 80% by weight, of aromatics.

9. Rubberized textile material as claimed in any of claims 1 to 8, **characterized in that** the at least one reactive phenol and/or reactive phenol resin contains reactive OH groups and/or reactive methylol groups.

10. Rubberized textile material as claimed in any of claims 1 to 9, **characterized in that** the rubber mixture contains the fillers carbon black and/or at least one mineral oxide, namely preferably silicon dioxide.

11. Rubberized textile material as claimed in any of claims 1 to 10, **characterized in that** the rubber mixture is applied to the textile material by onesided or bothsided covering, immersion, knife-coating or frictioning.

12. Rubber mixture for producing a rubberized textile material as claimed in any of claims 1 to 10 for use in a drive belt or conveyor belt.

13. Rubber mixture as claimed in claim 12, wherein the rubber mixture for rubberizing the textile material has a Mooney viscosity ML1+4 (100°C) of 20 to 50 [MU].

14. Belt having at least one ply of the rubberized textile material as claimed in any of claims 1 to 10, wherein the textile material forms an inner textile ply or is applied to at least one side of the belt as a cover ply or envelops the belt as an encapsulation.

15. Belt as claimed in claim 13 or 14, wherein the belt is a V-belt, ribbed V-belt or toothed belt.

## Revendications

1. Matériau textile caoutchouté pour une couche textile de courroie, dans lequel une bande textile est équipée au moins sur un côté avec un mélange de caoutchouc d'éthylène-alpha-oléfine (EAO) à réticuler par voie peroxydique, **caractérisé en ce que** le mélange de caoutchouc d'éthylène-alpha-oléfine contient un terpolymère d'éthylène-alpha-oléfine-diène ou est constitué par celui-ci, et **en ce que** le mélange de caoutchouc contient un agent de réticulation peroxydique, une huile minérale ayant une proportion de composés aromatiques d'au moins 50 pour cent en poids et au moins un phénol réactif et/ou une résine de phénol réactive apte à la liaison sur les doubles liaisons de polymères insaturés, le phénol réactif/la résine de phénol réactive et l'huile minérale étant contenus ensemble en une teneur de 5 à 60 pce dans le mélange de caoutchouc.

2. Matériau textile caoutchouté selon la revendication 1, **caractérisé en ce que** le mélange de caoutchouc contient au moins 50 pce de terpolymère d'éthylène-alpha-oléfine-diène, de préférence au moins 70 pce.

3. Matériau textile caoutchouté selon la revendication 1 ou 2, **caractérisé en ce que** la teneur en diène du terpolymère d'éthylène-alpha-oléfine-diène est de 4 à 11 %, de préférence de 6 à 11 % et notamment de 8 à 11 %.

4. Matériau textile caoutchouté selon l'une quelconque des revendications 1 à 3, **caractérisé en ce que** le terpolymère d'éthylène-alpha-oléfine-diène est un terpolymère d'éthylène-propylène-diène (EPDM).

5. Matériau textile caoutchouté selon l'une quelconque des revendications 1 à 4, **caractérisé en ce que** le rapport en poids entre l'huile minérale aromatique et le phénol réactif/la résine de phénol réactive est de 4:1 à 3:5.

6. Matériau textile caoutchouté selon l'une quelconque des revendications 1 à 5, **caractérisé en ce que** le mélange de caoutchouc contient 5 à 40 pce d'un ou de plusieurs coactivateurs, choisis dans le groupe constitué par les acrylates, les méthacrylates, les acrylates d'uréthane, les isocyanates d'allyle, les cyanurates, les isocyanurates, les guanidines, les oximes, les bismaléimides et le soufre, à chaque fois individuellement ou en combinaison.

7. Matériau textile caoutchouté selon l'une quelconque des revendications 1 à 6, **caractérisé en ce que** le mélange de caoutchouc contient 5 à 25 pce d'au moins un coactivateur ionique métallo-organique du groupe constitué par les acrylates de métaux et les méthacrylates de métaux, de préférence le diméthacrylate de zinc (ZnDMA).

8. Matériau textile caoutchouté selon l'une quelconque des revendications 1 à 7, **caractérisé en ce que** l'huile minérale dans le mélange de caoutchouc comprend 50 à 95 % en poids, de préférence 60 à 80 % en poids, de composés aromatiques.

9. Matériau textile caoutchouté selon l'une quelconque des revendications 1 à 8, **caractérisé en ce que** ledit au moins un phénol réactif et/ou ladite au moins une résine de phénol réactive contient des groupes OH réactifs et/ou des groupes méthylol réactifs.

10. Matériau textile caoutchouté selon l'une quelconque des revendications 1 à 9, **caractérisé en ce que** le mélange de caoutchouc contient les charges noir de carbone et/ou au moins un oxyde minéral, à savoir de préférence le dioxyde de silicium.

11. Matériau textile caoutchouté selon l'une quelconque des revendications 1 à 10, **caractérisé en ce que** le mélange de caoutchouc est appliqué sur le matériau textile par enduction, immersion, raclage ou frottement sur un côté ou sur les deux côtés.

12. Mélange de caoutchouc pour la fabrication d'un matériau textile caoutchouté selon l'une quelconque des revendications 1 à 10 destiné à une utilisation dans une courroie d'entraînement ou de transport.

13. Mélange de caoutchouc selon la revendication 12, **caractérisé en ce que** le mélange de caoutchouc pour le caoutchoutage du matériau textile présente une viscosité de Mooney ML1+4 (100 °C) de 20 à 50 [ME].

14. Courroie comprenant au moins une couche du matériau textile caoutchouté selon l'une quelconque des revendications 1 à 10, **caractérisée en ce que** le matériau textile forme une couche textile intérieure ou est appliqué sur au moins un côté de la courroie en tant que revêtement, ou entoure la courroie en tant qu'enveloppe.

15. Courroie selon la revendication 13 ou 14, **caractérisée en ce que** la courroie est une courroie trapézoïdale, une courroie trapézoïdale nervurée ou une courroie dentée.
